# EUROPEAN PATENT SPECIFICATION

(11) **EP 0 401 801 B1**
(45) Date of publication and mention of the grant of the patent: **17.03.1993**
(21) Application number: 90110730.0
(22) Date of filing: 06.06.1990
(51) Int. Cl.: H01S 3/092

(54) **Piezoelectric crystal-powered laser ignition device**
Von einem piezoelektrischen Kristall ausgelöste Laserzündungsvorrichtung
Dispositif d'allumage déclenché par un laser alimenté par un cristal piézoélectrique

(30) Priority: 06.06.1989 US 362125
(43) Date of publication of application: 12.12.1990
(73) Proprietor: HERCULES INCORPORATED, Wilmington Delaware 19894 (US)
(72) Inventor: Rice, John Harold, Jr., Keyser, West Virginia 26726 (US)
(74) Representative: Lederer, Franz, Dr.

(56) References cited:
- US-A- 3 618 526
- US-A- 3 909 745
- US-A- 4 249 887

## Description

This invention relates to devices igniting pyrotechnic materials by means of a beam of light from a solid state laser.

Laser ignition devices comprising neodymium glass or YAG lasers are known, as described in U.S. Patent Nos. 3,618,526 and 3,408,937. U.S. Patent 3,408,937 mentions the disadvantages of direct ignition using electrical bridge wires, and describes apparatus for igniting an explosive device by using laser energy conveyed by a fiber optic conduit. The laser is caused to emit its polarized light beam ("pumped") by a basic light source, which is referred to as chemically generated light or any other suitable laser source, including a single polychromatic light source. U.S. Patent 3,618,526 also discloses apparatus for detonating an explosive device by laser energy conveyed by fiber optic bundles conected to responsive detonators. It describes the use of known lasers actuated by xenon flash tubes as unsatisfactory and relies on a pyrotechnic coating on a case enclosing the laser, with an electrically actuated squib arranged to ignite the coating to actuate the laser. The pumping flash may be enhanced by placing coils of an active metal like magnesium between the coating and the laser.

The need for a high-current power source such as a battery or a large capacitor for actuating a laser has been addressed by U.S. Patent 3,909,745, which uses mechanical energy as a source of current, for instance a spring-loaded hammer arranged to strike a piezoelectric crystal that charges a capacitor and provides an infrared pulse that actuates a laser transmission.

Particularly in applications such as the pyrotechnic devices in an aircraft ejection seat, there is a need for a lightweight, small ignition device that may be stored for long periods of time and has its own power source.

According to the invention, a device for ignition of a pyrotechnic material including a solid state laser capable when actuated of emitting a light beam sufficient to ignite the pyrotechnic material, is characterized in that it also includes in combination with the laser a piezoelectric device capable of producing a high-voltage electrical pulse in response to the application of mechanical energy and a pyro flash lamp that has a spark gap actuatable by the high voltage electrical pulse and that emits a flash of light in response to actuation of the spark gap, the laser being actuatable in response to the said flash of light.

The piezoelectric device incorporated in the ignition device according to the invention is capable of producing opposite electrical charges on different surfaces when stressed mechanically. Crystals of tourmaline, Rochelle salt, lead-zirconate titanate and other substances will produce this effect. Lead-zirconate titanate is the preferred piezoelectric crystalline material for use in the invention. The electrical energy created when the piezoelectric crystal is stressed is conventionally stored in a high voltage storage capacitor. Such piezoelectric devices are well known in commerce, including for instance a preferred device identified as Ferroperm Piezoceramics Type PZ 24 and PZ 26 available from Seacor Inc., Westwood, New Jersey. Preferably the piezoelectric device incorporates a capacitor having a capacitance of 0.1 to 1.0 microfarad.

That device satisfies the requirement that the piezoelectric device must be capable of emitting a high enough voltage to power the pyro flash lamp, which is normally in the order of 10,000 or more, preferably 20,000 -50,000, volts. Preferably, the piezoelectric constant is 160 x 10⁻¹² C/N (coulombs/frequency constant) to 275 x 10⁻¹² C/N. Such piezoelectric devices typically have a diameter as small as 2.54 cm (0.1 inch) and a length as little as 0.254 cm. The above-identified preferred unit has a diameter of about 0.445 cm (0.175 inch) and a length of about 0.889 cm (0.350 inch) and significantly contributes to the goal of providing a small, compact ignition unit.

The piezoelectric device is conventionally triggered by a mechanical energy source sufficient to cause the piezoelectric means to emit the required voltage. A 28.4 g (one-ounce) weight driven by a spring having approximately a 11 g/cm (10 ounce/inch) strength would be appropriate, for example. A related use of spring loaded mass (to activate a source of an infra-red pulse) is known, for instance from the above-mentioned U.S. Patent 3,909,745. Alternatively, other conventional devices may be combined in asssociation with the ignition device according to the invention, to incorporate triggering inputs of high mechanical energy. For instance, an external mechanical or electrical trigger can be used to operate a pyrotechnic device that generates gas pressure to cause a suitable mass to impact the piezoelectric crystal.

The means for emitting light in response to the high voltage electrical pulse typically comprises one or more pyro flash lamps similar to the photof lash lamps used in photography and well known, for instance, from U.S. Patent 4,249,887. They have an outer glass envelope filled with compressed oxygen and with external contact pins and lead wires that pass through the envelope and form a spark gap (without a bridge wire). The tips of the lead wires are coated with a pyrotechnic primer mixture, and the lamps conventionally have a loose mass of combustible metal strands of zirconium or hafnium. In response to a high voltage pulse, e.g., in the order of 10,000 or more volts, a spark jumps the gap between the lead wires and ignites the primer, which triggers the rapid combustion of the metal strands. It is a critical feature of the invention that the flash produced by this type of flash lamp, with a spark gap instead of a bridge wire, is sufficient to actuate the laser to the power level required to reliably ignite the pyrotechnic material.

Preferably the flash lamps have a light output of not less than 3800 Lumen-Seconds, with peak light occurring in less than 10 milliseconds after ignition, and are fired with the application of at least 10,000 volts. Illustrative is Sylvania Model No. S-1 of GTE Products Corporation, Montoursville, Pennsylvania. Preferably, the ignition device of this invention contains three or more, and more preferably six, such flash lamps surrounding the laser and connected electrically in a series configuration. The number of flash lamps used depends on the laser power required and/or the reliability required, as well as an appropriate level of redundancy; the preferred use of more than three flash lamps is to ensure redundancy. The small size of these commercial units also contributes to the goal of providing a small, compact ignition unit.

The laser is preferably a solid state ruby, neodymium YAG or neodymium glass laser, with the latter being preferred as it is useful over the broadest temperature range and is most economical. These lasers usually comprise a rod doped with 6 to 9 % neodymium molecules surrounded by clear glass clading emitting 1.06 micrometer amplified light. The laser is "pumped" or caused to emit its polarized light beam when the neodymium atoms are excited (and then decay) after light from the flash lamp enters through the sides of the laser. A particularly preferred laser useful in this invention is a Q-100 clad neodymium glass rod (available from Kigre Incorporated, Hilton Head Island, South Carolina), 4.42 cm (1.740 inch) long and having a 0.6 cm (0.236 inch) core, with Plano/Plano ends. The ends are parallel within 2 inch arc. The finish is 10/5 S/D (Scrape/Dig) and Lambda over 10 flat. Reflectivity is maximum on one end and 95.5% on the other end. The outside diameter has either a fine ground or polished finish. Such lasers are also available from Hoya Optics Incorporated of Freemont, California.

The laser light beam must have sufficient power to ignite the desired mass of pyrotechnic material in, for example, the propellant of a rocket motor igniter or an ignitor (initiator), i.e., separate pyrotechnic material used for ignition. A planoconvex optic lens is conventionally used to focus or condense the beam, typically from a diameter of 0.63 cm (0.25 inch) to a diameter of 0.09 cm (0.035 inch). The focused light beam may be applied directly to the pyrotechnic material to be ignited or through an optical fiber cable, e.g., comprising fused silica optical fibers. The optical fiber cable is useful when it is desirable to separate the ignition device and the device containing the pyrotechnic material, and where ignition of more than one mass of pyrotechnic material with one laser ignition device is desired.

Ignition devices according to this invention preferably have mechanical or electrical safety features, more preferably both. For instance, a conventional mechanical shutter for preventing the laser beam from striking the pyrotechnic material accidentally will prevent undesired ignition.

In the drawings, in which the same reference character indicates the same part:

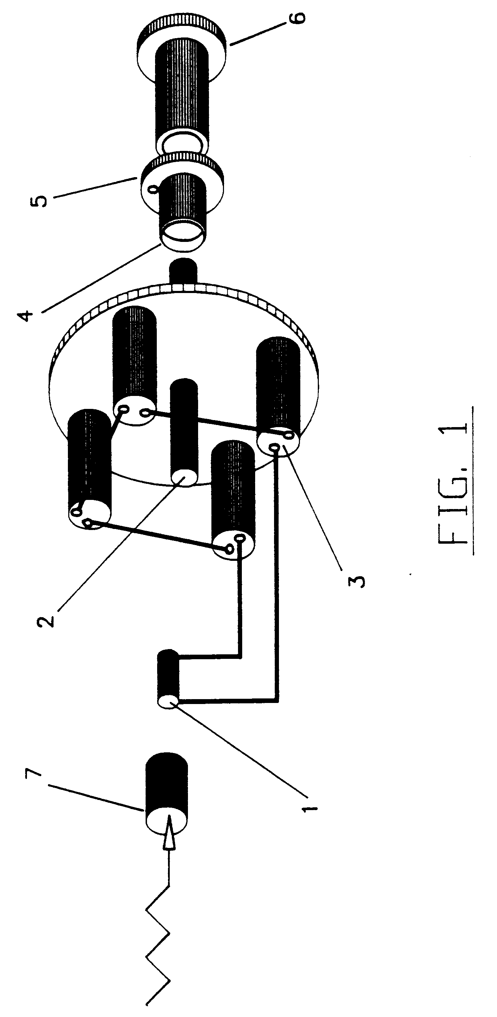

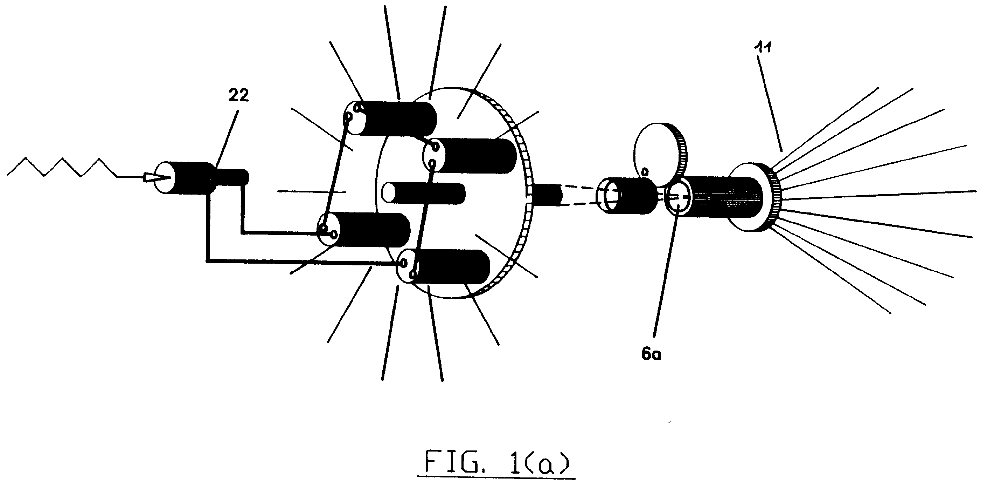

Figure 1 shows an ignition device having a piezoelectric crystal (1), a solid state laser (2), four photoflash lamps surrounding the laser and electrically connected to the piezoelectric device and each other in a series configuration (3), an optical lens (4) for focusing the laser beam, a shutter (5) in closed position and an initiator (6) (for instance, a capsule containing pyrotechnic material used to ignite a solid rocket motor), and a spring loaded weight assembly (7).
Figure 1(a) shows the spring loaded weight as it strikes the piezoelectric crystal (1) at point of contact (22) and produces a high voltage pulse that causes the lamps (3) to flash, with the shutter (5) in its open position that permits the laser beam to pass through the lens (4) and a glass window (6a) and to strike the pyrotechnic material in the initiator (6).

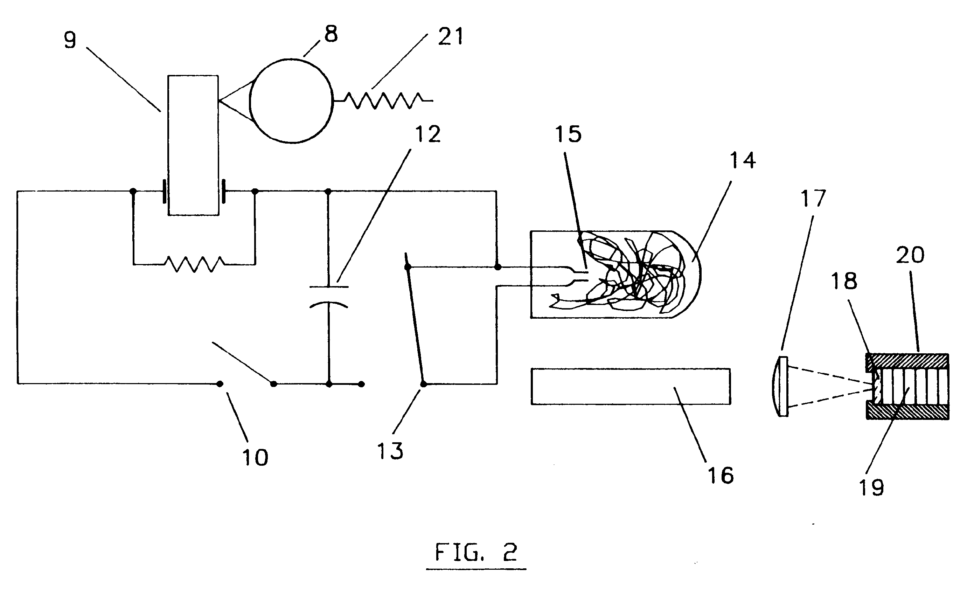

Figure 2 is a schematic diagram of another embodiment of a laser ignition system according to the invention or use in a gun-launched rocket-assisted projectile. Using gun propellant ignited by conventional firing pin, the rocket-assisted projectile is fired from a gun. The "set-back" force or gun motion (21) created when the gun is fired causes a seismic mass or weight (8) in the rocket motor to be set in motion and strike and stress a piezoelectric crystal (9). An electrical safety switch (10) is closed by the same force. The electrical energy created when the piezoelectric crystal is stressed is stored in the high voltage storage capacitor (12). As the projectile exits the gun, the negative acceleration force which is experienced causes the time delay switch (13) to close. As the switch closes, the stored electrical energy in the capacitor is applied to the flash lamps (14) (only one is shown) having a spark gap (15), causing them to fire. The resulting light pumps the laser (16) which emits a light beam that travels though lens (17) and window (18) to strike the pyrotechnic material (19) of rocket motor initiator (20), causing the pyrotechnic material to ignite the rocket motor. The capacitor used in this embodiment has a capacitance of 0.1 to 1.0 microfarad and is smaller than those used for firing gas filled lasers.

Referring to Figure 1, the spring loaded weight assembly (7) may form part of the initiator device or may be operated in a separate device. The shutter is shown in the closed position where it prevents the laser beam from reaching and igniting the pyrotechnic material.

Referring to Figure 1(a), the glass window (6a) serves as a pressure seal between the shutter (5) and the initiator (6). The hot gas output (11) of the initiator pyrotechnic material is shown. In this embodiment, this hot gas ignites the pyrotechnics of a solid rocket motor.

In another embodiment, a rotating shaft having a hole is placed between the laser and the pyrotechnic material or the optical fiber for transmitting the laser beam to the pyrotechnic material. A safe condition exists when the hole and laser beam are out of alignment, since the shaft will prevent the laser beam from reaching and igniting the pyrotechnic material. To arm the device the shaft is rotated so that the laser beam may travel through the hole.

Other mechanical safety devices, such as means for rotating or moving the laser (or structure comprising the laser and flash lamps) into and out of alignment with the pyrotechnic material or optical fiber, means for moving or rotating the optical fiber into and out of alignment, and mechanical means for preventing the device from being triggered (e.g., locking the release handle or firing pin in place, using a rotating spring-loaded mass with safe and arm positions, etc.), may be used to prevent undesired ignition.

A conventional shorting switch can also be used as a safe device. For instance, a wire connecting the two pins of the flash lamp creates a short circuit and prevents sparking across the spark gap in the flash lamp.

The ignition device of this invention is light in weight, comparatively small, can be stored over an unlimited period of time and provides high levels of laser energy. It can be as small as 2.54 cm (one inch) in diameter and 5.08 cm (two inches) long, and as light as 56.7 g (two ounces). It can be used to ignite most pyrotechnic or ordnance systems that can be ignited using conventional laser ignition devices and other types of devices for which use of such devices was impractical or impossible because they required a high-current power source; e.g., devices where previously electro-explosive squibs would be the preferred means of ignition. It is well-suited for ignition of relatively insensitive pyrotechnic materials such as solid rocket motors, explosive device used in commercial blasting or military ordnance, etc. Another advantage of this invention is that redundancy can easily be built in to the system, both to ensure safety when ignition is not desired and to ensure proper and timely ignition.

## Claims

1. A device for ignition of a pyrotechnic material (19) including a solid state laser (2,16) capable when actuated of emitting a light beam sufficient to ignite the pyrotechnic material, characterized in that it also includes in combination with the laser a piezoelectric device (1,9) capable of producing a high-voltage electrical pulse in response to the application of mechanical energy (7,8,21) and a pyro flash lamp (3,14) that has a spark gap (15) actuatable by the high voltage electrical pulse and that emits a flash of light in response to actuation of the spark gap, the laser being actuatable in response to the said flash of light.

2. A device for ignition of a pyrotechnic material as claimed in claim 1, wherein the flash lamp has an outer glass envelope filled with compressed oxygen and a loose mass of combustible metal strands, with external contact pins and lead wires that pass through the envelope and form a spark gap, the tips of the lead wires being coated with a pyrotechnic primer mixture.

3. A device for ignition of a pyrotechnic material as claimed in claim 2, wherein the flash lamp flashes in response to a high voltage pulse on the order of 10,000 or more volts, and has a light output of not less than 3800 Lumen-Seconds with peak light occurring in less than 10 milliseconds after ignition.

4. A device for ignition of a pyrotechnic material as claimed in claim 1, 2, or 3, wherein the piezoelectric device comprises crystals lead-zirconate titanate, is capable of emitting at least 10,000 volts, and incorporates a capacitor having a capacitance of 0.1 to 1.0 microfarad.

5. A device for ignition of a pyrotechnic material as claimed in claim 4, wherein the piezoelectric device is be capable of emitting 20,000 to 50,000 volts, has a piezoelectric constant of 160 x 10⁻¹² C/N (coulombs/frequency constant) to 275 x 10⁻¹² C/N.

6. A device for ignition of a pyrotechnic material as claimed in claim 4 or 5, wherein the piezoelectric device has a diameter of about 0.445 cm and a length of about 0.889 cm.

7. A device for ignition of a pyrotechnic material as claimed in any of the preceding claims, wherein the laser is a ruby, neodymium glass or neodymium YAG laser.

8. A device for ignition of a pyrotechnic material as claimed in claim 7, wherein the laser is a Q-100 clad neodymium glass rod, 4.42 cm long and having a 0.6 cm core.

## Patentansprüche

1. Vorrichtung zur Zündung eines pyrotechnischen Materials (19), die einen Festkörperlaser (2, 16) aufweist, der, wenn er in Betrieb gesetzt wird, in der Lage ist, einen Lichtstrahl zu emittieren, der ausreicht, das pyrotechnische Material zu zünden, dadurch gekennzeichnet, daß sie in Kombination mit dem Laser auch eine piezoelektrische Vorrichtung (1, 9) aufweist, die in der Lage ist, als Reaktion auf die Anwendung von mechanischer Energie (7, 8, 21) einen elektrischen Hochspannungsimpuls zu erzeugen, und eine Pyroblitzlampe (3, 14) mit einer Funkenstrecke (15), die durch den elektrischen Hochspannungsimpuls auslösbar ist und die als Reaktion auf die Inbetriebnahme der Funkenstrecke einen Lichtblitz emittiert, wobei der Laser als Reaktion auf den Lichtblitz in Betrieb setzbar ist.

2. Vorrichtung zur Zündung eines pyrotechnischen Materials nach Anspruch 1, wobei die Blitzlampe einen äußeren Glaskolben aufweist, der mit komprimiertem Sauerstoff und einem lockeren Haufen verbrennbarer Mettaldrähte gefüllt ist, mit äußeren Kontaktstiften und Pyrometerdrähten, die durch den Kolben hindurchdringen und eine Funkenstrecke bilden, wobei die Enden der Pyrometerdrähte mit einem pyrotechnischen Zündergemisch beschichtet sind.

3. Vorrichtung zur Zündung eines pyrotechnischen Materials nach Anspruch 2, wobei die Blitzlampe als Reaktion auf einen Hochspannungsimpuls in der Größenordnung von 10.000 oder mehr Volt blitzt und eine Lichtabgabe von nicht weniger als 3800 Lumen-Sekunden hat, wobei der Lichthöchstwert in weniger als 10 Millisekunden nach der Zündung auftritt.

4. Vorrichtung zur Zündung eines pyrotechnischen Materials nach den Ansprüchen 1, 2 oder 3, wobei die piezoelektrische Vorrichtung Blei-Zirkonat-Titanat-Kristalle aufweist, in der Lage ist, mindestens 10.000 Volt abzugeben, und einen Kondensator mit einer Kapazität von 0,1 bis 1,0 Mikrofarad enthält.

5. Vorrichtung zur Zündung eines pyrotechnischen Materials nach Anspruch 4, wobei die piezoelektrische Vorrichtung in der Lage ist, 20.000 bis 50.000 Volt abzugeben, eine piezoelektrische Konstante von 160x10⁻¹² C/N (Coulomb/Frequenzkonstante) bis 275x10⁻¹² C/N aufweist.

6. Vorrichtung zur Zündung eines pyrotechnischen Materials nach den Ansprüchen 4 oder 5, wobei die piezoelektrische Vorrichtung einen Durchmesser von etwa 0,445 cm und eine Länge von etwa 0,889 cm hat.

7. Vorrichtung zur Zündung eines pyrotechnischen Materials nach einem der vorhergehenden Ansprüche, wobei es sich bei dem Laser um einen Rubin-, Neodym-Glas-oder Neodym-YAG-Laser handelt.

8. Vorrichtung zur Zündung eines pyrotechnischen Materials nach Anspruch 7, wobei es sich bei dem Laser um einen Q-100-Mantel-Neodym-Glasstab handelt, 4,42 cm lang und mit einem Kern von 0,6 cm.

## Revendications

1. Dispositif pour l'allumage d'une matière pyrotechnique (19), comprenant un laser solide (2,16) capable, lorsqu'il est activé, d'émettre un faisceau lumineux suffisant pour allumer la matière pyrotechnique, caractérisé en ce qu'il comprend aussi en combinaison avec le laser un dispositif piezoélectrique (1,9), qui est capable de produire une impulsion électrique haute tension en réponse à l'application d'une énergie mécanique (7,8,21), et une lampe flash à filaments combustibles (3,14), qui possède un éclateur (15) activable par l'impulsion électrique haute tension et qui émet un éclat de lumière en réponse à l'activation de l'éclateur, le laser pouvant être activé en réponse audit éclat de lumière.

2. Dispositif pour l'allumage d'une matière pyrotechnique selon la revendication 1, dans lequel la lampe flash possède une enveloppe extérieure en verre, remplie d'oxygène comprimé et d'une masse libre de filaments métalliques combustibles, et munie de broches externes de contact et de fils conducteurs, qui passent à travers l'enveloppe et forment un éclateur, les extrémités des fils conducteurs étant revêtus d'un mélange primaire pyrotechnique.

3. Dispositif pour l'allumage d'une matière pyrotechnique selon la revendication 2, dans lequel la lampe flash émet un éclat lumineux en réponse à une impulsion haute tension de l'ordre de 10 000 volts ou plus et possède une puissance lumineuse de sortie d'au moins 3800 lumen-secondes, avec un pic de lumière se produisant en moins de 10 millisecondes après l'allumage.

4. Dispositif pour l'allumage d'une matière pyrotechnique selon la revendication 1, 2 ou 3, dans lequel le dispositif piézoélectrique comprend des cristaux de titanate-zirconate de plomb, est capable de produire au moins 10 000 volts et inclut un condensateur ayant une capacité de 0,1 à 1 microfarad.

5. Dispositif pour l'allumage d'une matière pyrotechnique selon la revendication 4, dans lequel le dispositif piézoélectrique est capable de produire 20 000 à 50 000 volts, a une constante piézoélectrique de 160.10⁻¹² C/N (coulombs/constante de fréquence) à 275.10⁻¹² C/N.

6. Dispositif pour l'allumage d'une matière pyrotechnique selon la revendication 4, dans lequel le dispositif piézoélectrique a un diamètre d'environ 0,445 cm et une longueur d'environ 0,889 cm.

7. Dispositif pour l'allumage d'une matière pyrotechnique selon l'une quelconque des revendications précédentes, dans lequel le laser est un laser à rubis, un laser à verre au néodyme ou un laser YAG-néodyme.

8. Dispositif pour l'allumage d'une matière pyrotechnique, selon la revendication 7, dans lequel le laser est une tige de verre au néodyme revêtue de Q-100, de 4,42 cm de long et ayant un noyau de 0,6 cm.
